# EUROPEAN PATENT APPLICATION

(11) **EP 1 793 293 A1**
(43) Date of publication of application: **06.06.2007**
(21) Application number: 06256097.4
(22) Date of filing: 29.11.2006
(51) Int. Cl.: G05B 19/414, G05B 19/418

(54) **Numerical control system with two separated daisy-chain bus systems for the connection to servo amplifiers and position encoders**

(30) Priority: 30.11.2005 JP 2005346377
(71) Applicant: FANUC LTD, Minamitsuru-gun, Yamanashi 401-0597 (JP)
(72) Inventor: Kurakake, Mitsuo, Tokyo, 166 0012 (JP); Aoyama, Kazunari, FANUC Manshonharimomi, Minamitsuru-gun Yamanashi 401-0511 (JP); Komaki, Kunitaka, Minamitsuru-gun Yamanashi 401-0301 (JP); Aizawa, Yasuharu, Minamitsuru-gun Yamanashi 401-0302 (JP)
(74) Representative: Billington, Lawrence Emlyn

(57) **Abstract**

A numerical control system with shortened communication paths to lower a cost of the system is presented. A plurality of servo amplifiers (A1-A4) for respectively controlling a plurality of servomotors (M1-M4) are arranged separately from a numerical controller (1). Pulse encoders (P1-P4) for detecting positions/velocities of the servomotors are connected to the numerical controller by optical cables (3) forming a first serial communication path in a daisy chain, via a branch unit (4). The servo amplifiers for driving the servomotors are connected to the numerical controller by optical cables in a second daisy chain (2), via the branch unit. Since the communication path (3) for transmitting signals from the pulse encoders connects the pulse encoders (P1-P4) and the numerical controller (1) without the servo amplifiers (A1-A4) intervened in between, the communication path is not elongated even in a case of the servo amplifiers are located remote from the servomotors, to construct the system with a low cost.

## Description

### BACKGROUND OF THE INVENTION

### 1. Field of the Invention

The present invention relates to a numerical control system for controlling a plurality of servomotors.

### 2. Description of Related Art

In a numerical control system for controlling a plurality of servomotors, a numerical controller and amplifiers for driving respective servomotors are connected by electric cables, and signals from detectors provided at the respective servomotors for detecting positions/velocities of the servomotors are fed back to the numerical controller that performs feedback control of positions/velocities of the respective servomotors. In some systems, the servo amplifiers for driving the respective servomotors are provided within the numerical controller so that outputs from the servo amplifiers are fed to the respective servomotors (see JP 7-49708A, JP 10-275006A).

However, since the servo amplifiers include inverters for controlling electric power to the servomotors, signal processing sections of the numerical controller are influenced by noises made by switching actions of the inverters. To cope with this problem, there have been adopted a system in which the servo amplifiers are placed at a power circuitry section provided separately from the numerical controller so that the numerical controller and the servo amplifiers are separated.

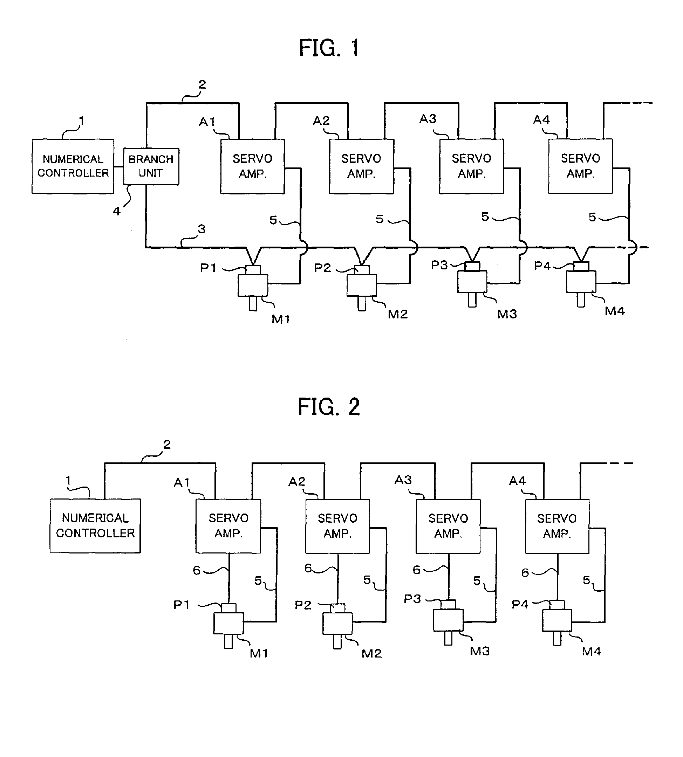

FIG. 2 shows an example of a conventional numerical control system in which a numerical controller and servo amplifiers are arranged separately.

A numerical controller 1 and servo amplifiers A1, A2, A3, ... are connected in a daisy chain by electric or optical communication cables 2. The servo amplifiers A1, A2, A3, ... are respectively connected to servomotors M1, M2, M3, ... by electric power cables 5, and to pulse encoders P1, P2, P3, ... for detecting positions/velocities of the servomotors M1, M2, M3, ... by communication cables 6.

The positions/velocities detected by the pulse encoders P1, P2, P3, ... are fed back to the numerical controller 1 through the communication cables 6, the servo amplifiers A1, A2, A3, ..., and the electric or optical communication cables 2. The numerical controller 1 performs position/velocity feedback controls based on command positions/velocities and the fed back positions/velocities to output driving commands to the respective servo amplifiers A1, A2, A3, ... The servo amplifiers A1, A2, A3, ... control electric currents to flow windings of the respective servomotors M1, M2, M3, ... by means of inverters so that the servomotors M1, M2, M3, ... are drivingly controlled.

As described above, in the case where the servo amplifiers A1, A2, A3, ... are arranged separately from the numerical controller 1, the signals from the pulse encoders P1, P2, P3, ... are fed back to the numerical controller 1 via the servo amplifiers A1, A2, A3, ... and the electric or optical communication cables 2 connected to the numerical controller 1.

In dependence on a structure and/or an installing place of a machine to be controlled, there is a case where the servo amplifiers A1, A2, A3, ... and the servomotors M1, M2, M3, ... have to be placed remote from each other. In such case, the signal paths between the servo amplifiers A1, A2, A3, ... and the servomotors M1, M2, M3, ... have to be elongated so that long communication cables 6 respectively for the servomotors M1, M2, M3, ... are required to be laid, to increase a system cost and a burden of laying the cables.

### SUMMARY OF THE INVENTION

The present invention provides a numerical control system capable of shortening communication paths to lower a system cost.

A numerical control system of the present invention comprises: a numerical controller; a plurality of servo amplifiers arranged separately from the numerical controller and connected to the numerical controller; a plurality of servomotors driven by the servo amplifiers and having detectors respectively provided for detecting position and/or velocity of the servomotors; and a serial communication path in a daisy chain for connecting the detectors respectively provided in the servomotors to the numerical controller.

The serial communication path may comprise an optical communication path. The serial communication path may directly connect the detectors respectively provided in the servomotors to the numerical controller.

The numerical controller and the servo amplifiers may be connected by a serial communication line in a daisy chain via a branch unit, and the serial communication path may connect the detectors respectively provided in the servomotors and the numerical controller via the branch unit.

With the above configuration, the signals from the detectors for detecting positions/velocities of the servomotors are sent to the numerical controller through the serial communication path in a daisy chain without passing through the servo amplifiers, so that the communication path for feeding back the detected signals to the numerical controller is not so elongated even in a case where the servo amplifiers and the servomotors have to be located remote from each other, to enable construction of the numerical control system with a low cost.

### BRIEF DESCRIPTION OF THE DRAWINGS

FIG. 1 is a schematic diagram of a numerical control system according to an embodiment of the present invention; and
FIG. 2 is a schematic diagram of a conventional numerical control system.

### DETAILED DESCRIPTION

FIG. 1 shows an numerical control system according to an embodiment of the present invention. In FIG. 1, servo amplifiers A1, A2, A3, ... are connected to a numerical controller 1 by optical cables 2 which make a serial communication path in the form of a daisy chain, via a branch unit 4. The servo amplifiers A1, A2, A3, ... respectively drive servomotors M1, M2, M3, ... through electric power cables 5. The servomotors M1, M2, M3, ... are provided with pulse encoders P1, P2, P3, ... for detecting positions/velocities of the servomotors M1, M2, M3, ..., respectively. The pulse encoders P1, P2, P3, ... are connected to the numerical controller 1 by optical cables 3 which make a serial communication path in the form of a daisy chain, via the branch unit 4.

The numerical controller 1 sends signals for controlling positions/velocities of the servomotors M1, M2, M3, ... to the servo amplifiers A1, A2, A3, ... through the optical cables 2 forming the serial communication path, via the branch unit 4. The servo amplifiers A1, A2, A3, ... receive the control signals from the numerical controller 1 and control driving currents to the servomotors M1, M2, M3, ... by means of inverters, etc. to drivingly control the servomotors M1, M2, M3, ... through the electric power cables 5. The signals of positions/velocities from the pulse encoders P1, P2, P3, ... provided at the servomotors M1, M2, M3, ... are fed back to the numerical controller 1 through the optical cables 3 forming the serial communication path in a daisy chain, via a branch unit 4. The numerical controller 1 performs position/velocity feedback controls based on command values commanded by a machining program, etc. and the fed back signals of positions/velocities to output driving commands to the servo amplifiers A1, A2, A3, ...

The numerical control system according to the embodiment of the present invention is different from the conventional system as shown in FIG. 2 in that the signals from the pulse encoders P1, P2, P3, ... are fed back to the numerical controller 1 by the optical cables 3 forming the daisy-chain communication path via the branch unit 4 according to the embodiment of the invention, whereas the signals from the pulse encoders P1, P2, P3, ... are sent to the servo amplifiers A1, A2, A3, ... through the electric communication cables 6 and fed back to the numerical controller 1 through the optical communication cables 2 in the conventional system. The cables for connecting the servo amplifiers A1, A2, A3, ... and the pulse encoders P1, P2, P3, ... are unnecessary in the embodiment of the invention, and thus in the case where the servo amplifiers A1, A2, A3, ... and the servomotors M1, M2, M3, ... have to be placed at remote locations, the numerical controller 1 and the pulse encoders P1, P2, P3, ... are connected by the optical cables 3 forming the communication path of a daisy chain without the cables for connecting the servo amplifiers and the pulse encoders to enable constitution of the numerical control system with a low cost, in comparison with the conventional system where the cables 6 for connecting the servo amplifiers A1, A2, A3, ... and the pulse encoders P1, P2, P3, ... have to be elongated in such case.

In the above embodiment, the optical cables 2 and 3 forming the serial communication paths are connected to the numerical controller 1 via the branch unit 4, however, the branch unit 4 does not necessarily have to be provided so that the optical cables 2 and 3 may be directly connected to the numerical controller 1.

## Claims

1. A numerical control system comprising:
a numerical controller;
a plurality of servo amplifiers arranged separately from said numerical controller and connected to said numerical controller;
a plurality of servomotors driven by said servo amplifiers and having detectors respectively provided for detecting position and/or velocity of the servomotor; and
a serial communication path in a daisy chain for connecting the detectors respectively provided in said servomotors to said numerical controller.

2. A numerical control system according to claim 1, wherein said serial communication path comprises an optical communication path.

3. A numerical control system according to claim 1, wherein said serial communication path directly connects the detectors respectively provided in said servomotors to said numerical controller.

4. A numerical control system according to claim 1, wherein said numerical controller and said servo amplifiers are connected by a serial communication line in a daisy chain via a branch unit, and said serial communication path connects the detectors respectively provided in said servomotors to said numerical controller via the branch unit.
